# EUROPÄISCHE PATENTANMELDUNG

(11) **EP 4 101 824 A1**
(43) Veröffentlichungstag der Anmeldung: **14.12.2022**
(21) Anmeldenummer: 22182425.3
(22) Anmeldetag: 28.05.2020
(51) Int. Cl.: C04B 26/14, C04B 28/00, C04B 28/02, C04B 28/04, C04B 111/60, C04B 111/94

(54) **LEITFÄHIGER MÖRTEL**

(30) Priorität: 28.05.2019 EP 19176999
(62) Teilanmeldung aus: 20728050.4
(71) Anmelder: Sika Technology AG, 6340 Baar (CH)
(72) Erfinder: Moser, Thomas, 8048 Zürich (CH); Sturzenegger, Jürg, 8633 Wolfhausen (CH); Würmli, Fabio, verstorben (CH); Kelch, Steffen, 8102 Oberengstringen (CH)
(74) Vertreter: Sika Patent Attorneys

(57) **Zusammenfassung**

Die vorliegende Erfindung betrifft die Verwendung einer Bindemittelzusammensetzung für die Herstellung von Materialien mit verbesserter elektrischer Leitfähigkeit, wobei die Bindemittelzusammensetzung eisenhaltige Schlacke enthält.

## Beschreibung

### Technisches Gebiet

Die Erfindung betrifft Bindemittelzusammensetzungen mit verbesserter elektrischer Leitfähigkeit, sowie ihre Herstellung und Verwendung als Mörtel, Estrich, Verputz, Vergussmasse, Beschichtung, Ausgleichsmasse oder für Opferanoden.

### Stand der Technik

Baustoffe mit elektrisch leitenden Eigenschaften sind für viele Bereiche vorgeschrieben oder wünschenswert. So wird für Fussböden in explosionsgefährdeten Räumen zur Verhinderung der Funkenbildung bei elektrostatischer Aufladung eine gute elektrische Leitfähigkeit gefordert. Auch in Räumen, in denen medizinische Geräte angewendet werden, oder in Bereichen, in denen elektronische Bauteile produziert oder verwendet werden, ist eine gute elektrische Leitfähigkeit des Fussbodens zur Vermeidung der elektrostatischen Aufladung notwendig.

Auch für die elektrostatische Abschirmung von Raumbereichen ist ein elektrisch leitender und eventuell noch magnetischer Baustoff vorteilhaft.

Für den Einsatz in Kombination mit Fussbodenheizungen ist ein Fussboden mit guter Wärmeleitfähigkeit von Vorteil.

Um Materialien besser elektrisch leitfähig zu machen werden typischerweise Graphit, Russ oder leitfähige Fasern, wie Kohlenstoff- oder Metallfasern, zugegeben.

US 3 962 142 beschreibt eine zementöse Mischung die elektrisch leitfähiges Material mit grosser und kleiner Partikelgrösse enthält. Das elektrisch leitfähige Material ist kalzinierter Erdölkoks und Acetylenruss.

EP 2 476 658 beschreibt eine Bindemischung zur Herstellung von wärmeleitfähigen Estrichen. Die Bindemischung enthält 2 bis 3 Gewichts-% Graphit, welcher zu 90% Teilchen mit einer Grösse von 125-400 µm aufweist.

Russ oder Graphitstaub sind feine, schwarze, staubende Materialien, deren Handhabung typischerweise mit der Ablagerung von schwarzen Stäuben in der Umgebung verbunden ist. Russ und Graphitstaub können die Verarbeitbarkeit des Materials negativ beeinflussen und die Wirksamkeit von Zusatzmitteln verringern. Weiter ist das homogene Einmischen von Fasern in eine Bindemittelmatrix schwierig und die Anwesenheit von Fasern verschlechtert typischerweise die Verarbeitbarkeit. Die Zugabe von Russ oder Graphitstaub, Kohlenstofffasern oder Metallfasern erhöht zudem die Kosten des Materials.

Es besteht weiterhin der Bedarf nach Bindemittelzusammensetzungen für die Herstellung von Materialien mit verbesserter elektrischer Leitfähigkeit, welche die vorstehend genannten Nachteile möglichst überwinden.

### Darstellung der Erfindung

Aufgabe der vorliegenden Erfindung ist es, eine Bindemittelzusammensetzung zur Herstellung von Materialien mit verbesserter elektrischer Leitfähigkeit bereitzustellen, die gut und einfach verarbeitet werden kann und die Nachteile des Standes der Technik überwindet.

Überraschenderweise wird diese Aufgabe durch eine Bindemittelzusammensetzung, wie in Anspruch 1 beschrieben, gelöst.

Überraschenderweise zeigen Bindemittelzusammensetzungen, die eisenhaltige Schlacke enthalten, eine verbesserte elektrische Leitfähigkeit. Ebenso überraschend, kann die eisenhaltige Schlacke in hoher Menge und ohne Qualitätsverlust in der Bindemittelzusammensetzung eingesetzt werden. Die Bindemittelzusammensetzung, die eisenhaltige Schlacke enthält, zeigt gute Eigenschaften, wie insbesondere hohe Festigkeit und gute Verarbeitbarkeit. Überraschenderweise werden die Eigenschaften, insbesondere die Festigkeit, im Vergleich zum Stand der Technik, sogar noch verbessert.

Die Verwendung von Abfallprodukten, wie Schlacke, als Füllstoff in Bindemittelzusammensetzungen, bedeutet einen ökologischen Vorteil gegenüber der Verwendung von speziell aufbereiteten Füllstoffen aus natürlichen Lagerstätten. Einerseits werden die sich zunehmend verknappenden natürlichen Rohstoffquellen geschont und andererseits wird weniger Deponieraum für die Entsorgung der Abfallstoffe benötigt. Dies ist vorteilhaft aus wirtschaftlichen und Umweltgesichtspunkten.

Für gewisse Anwendungen, insbesondere für die elektromagnetische Abschirmung von Räumen, ist es weiter vorteilhaft, wenn das elektrisch leitfähige Material zusätzlich magnetische Eigenschaften aufweist, was durch die Verwendung von eisenhaltiger Schlacke mit magnetischen Eigenschaften möglich ist. Für gewisse Anwendungen, insbesondere für den Einsatz in Kombination mit Fussbodenheizungen, ist es weiter von Vorteil, dass das elektrisch leitfähige Material zusätzlich eine verbesserte thermische Leitfähigkeit aufweisen kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung einer Bindemittelzusammensetzung, umfassend mindestens ein Bindemittel und mindestens einen mineralischen Füllstoff, für die Herstellung von Materialien mit bei 20°C verbesserter elektrischer Leitfähigkeit, dadurch gekennzeichnet, dass mindestens 20 Gewichts-%, bevorzugt mindestens 30 Gewichts-%, mehr bevorzugt mindestens 40 Gewichts-%, noch mehr bevorzugt mindestens 50 Gewichts-%, im Speziellen mindestens 60 Gewichts-%, insbesondere mindestens 70 Gewichts-%, des mineralischen Füllstoffes eisenhaltige Schlacke sind.

Eine verbesserte elektrische Leitfähigkeit im Sinne der Erfindung liegt insbesondere vor, wenn der elektrische Widerstand des Materials enthaltend eisenhaltige Schlacke, gegenüber einem Material, das eine gleiche Zusammensetzung aufweist aber anstelle der eisenhaltigen Schlacke Quarzsand von gleicher Korngrösse enthält, um einen Faktor von mindestens 1.5 verringert ist. Ein geringerer elektrischer Widerstand bedeutet eine bessere elektrische Leitfähigkeit.

Bevorzugt umfasst die Bindemittelzusammensetzung 30 bis 95 Gewichts-%, besonders bevorzugt 40 bis 90 Gewichts-%, insbesondere 50 bis 85 Gewichts-%, mineralischen Füllstoff, bezogen auf das Gesamtgewicht der trockenen Bindemittelzusammensetzung.

Bevorzugt weist die Bindemittelzusammensetzung einen Anteil an eisenhaltiger Schlacke von 10 bis 95 Gewichts-%, mehr bevorzugt 20 bis 80 Gewichts-%, insbesondere 30 bis 75 Gewichts-%, bezogen auf das Gesamtgewicht der trockenen Bindemittelzusammensetzung, auf. Ein hoher Anteil an eisenhaltiger Schlacke verbessert die Leitfähigkeit und ist daher besonders vorteilhaft.

Als "Bindemittel" wird in diesem Dokument ein pulverförmiges oder flüssiges Material verstanden, das durch eine geeignete Reaktion in einen festen Formkörper überführt werden kann. Das Bindemittel kann einkomponentig vorliegen, das bedeutet, es reagiert bei Zugabe von Wasser zu einem Feststoff, oder es kann mehrkomponentig vorliegen, das bedeutet, es reagiert nach Vermischen der Komponenten, optional noch unter Zugabe von Wasser, zu einem Feststoff. Das Bindemittel bildet, wenn es mit Füllstoffen gemischt wird, nach dem Aushärten zusammen mit dem Füllstoff ein kompaktes Material. Das Bindemittel kann ein mineralisches oder ein organisches Bindemittel sein, oder eine Kombination aus mineralischem und organischem Bindemittel.

Als "mineralisches Bindemittel" versteht man im vorliegenden Dokument:
a) Ein Bindemittel, welches in Anwesenheit von Wasser in einer Hydratationsreaktion zu festen Hydraten oder Hydratphasen reagiert. Dies kann beispielsweise ein hydraulisches Bindemittel (z.B. Zement), ein latent hydraulisches Bindemittel (z.B. fein gemahlener Hüttensand), ein puzzolanisches Bindemittel (z.B. Flugasche) oder ein nicht hydraulisches Bindemittel (z.B. Gips) sein.
b) Ein Bindemittel, das nach dem Aushärten ein Geopolymer darstellt. Hierbei besteht das Bindemittel aus mindestens einem Aluminiumsilikat und mindestens einem Alkalisilikat welche nach einem Vermischen in wässrigem Medium zu einem Geopolymer reagieren.

Als "Bindemittelzusammensetzung" wird in diesem Dokument eine Zusammensetzung bezeichnet, die mindestens ein Bindemittel umfasst.

Als "trockene Bindemittelzusammensetzung" wird in diesem Dokument eine Bindemittelzusammensetzung bezeichnet, die kein Wasser enthält.

Als "eisenhaltig" wird in diesem Dokument ein Stoff bezeichnet, der mindestens 5 Gewichts-% Eisen umfasst, wobei das Eisen als FeO gerechnet wird, unabhängig von der Verbindung in der es vorliegt.

Unter "Rohdichte" wird im vorliegenden Dokument die Dichte eines Festkörpers verstanden. Die Rohdichte ergibt sich aus dem Quotienten von Gewicht des Festkörpers und dessen Volumen, einschliesslich des eingeschlossenen Porenvolumens.

Schlacke entsteht typischerweise als Nebenprodukt bei der Gewinnung von Metallen in der Erzverhüttung, dem Metallrecycling oder bei der Abfallverbrennung. Es handelt sich um ein Stoffgemisch das sich hauptsächlich aus den Oxiden und Silikaten verschiedener Metalle zusammensetzt. Die chemische Zusammensetzung von Schlacken wird typischerweise in Form der Oxide der enthaltenen Elemente angegeben, unabhängig davon, in welchen Verbindungen die Elemente effektiv vorliegen. So wird beispielsweise der Gehalt an Si als SiO₂, der Gehalt an Al als Al₂O₃ und der Gehalt an Fe als FeO angegeben. Der bei einer Zusammensetzung von Schlacken angegebene Prozentsatz für Bestandteile bezieht sich hierbei auf den Prozentsatz des Bestandteils als sein Oxid, bezogen auf die Summe aller Bestandteile in der Zusammensetzung, deren Gewicht ebenfalls in Form ihrer Oxide gerechnet wird. Die Hauptinhaltsstoffe von Schlacken sind CaO, SiO₂, Al₂O₃, MgO und FeO. Der Anteil dieser Stoffe in den verschiedenen Schlacketypen kann stark unterschiedlich sein. Die chemische Zusammensetzung der Schlacke kann mit Röntgenfluoreszenzanalyse gemäss DIN EN ISO 12677 bestimmt werden.

Das Eisen in der Schlacke liegt typischerweise als Eisenverbindung vor, beispielsweise als Eisenoxid wie Fe₃O₄, Fe₂O₃ und/oder FeO und/oder als Eisensilikat, wie beispielsweise Fe₂SiO₄, wobei diverse Mischkristalle oder Mischphasen auch mit anderen Metallen oder Nichtmetallen ebenfalls vorhanden sein können. Die Angabe als FeO schränkt das Eisen in der Schlacke keinesfalls auf diese Konfiguration ein, sondern umfasst das gesamte in der Schlacke vorhandene Eisen, unabhängig von dem Mineral oder der Verbindung in der es vorliegt, umgerechnet auf FeO. So entspricht beispielsweise eine analytisch bestimmte Menge von 10 g Eisen (Fe) einer Menge von 12.9 g FeO.

Eine eisenhaltige Schlacke ist Stahlschlacke. Sie ist ein Nebenprodukt beim Stahlrecycling oder der Stahlproduktion aus Roheisen. Im Gegensatz zu der Hochofenschlacke (HOS), die bei der Roheisenproduktion anfällt und einen Gehalt an Eisen, gerechnet als FeO, von typischerweise unter 3 Gewichts-% aufweist, enthält Stahlschlacke etwa 5 bis 45 Gewichts-%, Eisen, gerechnet als FeO. Stahlschlacke entsteht bei mehreren Verfahren und Schritten bei der Stahlerzeugung. Beispiele für Stahlschlacken sind Basic Oxygen Slag (BOS), welche als Nebenprodukt bei der Stahlerzeugung nach dem Sauerstoff-Blasverfahren anfällt, LD-Schlacke, welche bei dem Linz-Donawitz-Verfahren anfällt, oder Elektroofen-Schlacke (EOS), die bei der Stahlerzeugung oder dem Stahlrecycling mittels Elektrolichtbogenofen anfällt. Weitere Beispiele für Stahlschlacken sind beispielsweise Schlacken, die bei weiteren Stahlreinigungsprozessen anfallen, wie beispielsweise Schlacke aus dem Pfannenofen, die Pfannenschlacke (Ladle Slag). Stahlschlacken weisen typischerweise eine Rohdichte von etwa 3.0-3.7 kg/l, auf.

Weitere Prozesse, bei denen eisenhaltige Schlacken anfallen können, sind beispielsweise metallurgische Prozesse zur Gewinnung von Nicht-Eisen-Metallen. Diese Schlacken werden als Metallhüttenschlacken bezeichnet und können einen hohen Gehalt an Eisen aufweisen. Eine solche Metallhüttenschlacke ist Kupferschlacke, die als Nebenprodukt bei der Kupfergewinnung anfällt. Kupferschlacken weisen typischerweise einen Gehalt an Eisen von über 40 Gewichts-%, gerechnet als FeO, auf. Das Eisen in Kupferschlacken liegt typischerweise zu einem Grossteil in Form von Eisensilikat vor. Kupferschlacken haben typischerweise eine Rohdichte im Bereich von 3.7 kg/l.

Auch Schlacken, die in Abfall- oder Klärschlammverbrennungsanlagen anfallen, enthalten oft einen hohen Anteil an Eisen.

Bevorzugt umfasst die eisenhaltige Schlacke mindestens 8 Gewichts-%, mehr bevorzugt mindestens 10 Gewichts-%, noch mehr bevorzugt mindestens 12 Gewichts-%, Eisen, gerechnet als FeO, bezogen auf das Gewicht der eisenhaltigen Schlacke.

Insbesondere umfasst die eisenhaltige Schlacke 8 bis 70 Gewichts-%, bevorzugt 10 bis 65 Gewichts-%, insbesondere 12 bis 60 Gewichts-%, im Speziellen 15 bis 35 Gewichts-%, Eisen, gerechnet als FeO,
Solche Schlacken können die elektrische und auch die thermische Leitfähigkeit der ausgehärteten Bindemittelzusammensetzung verbessern.

Bevorzugt ist die eisenhaltige Schlacke ausgewählt aus der Gruppe umfassend Stahlschlacken, Metallhüttenschlacken und Schlacken aus der Müllverbrennung.

Bevorzugt ist die eisenhaltige Schlacke Stahlschlacke, insbesondere Schlacke aus dem Elektrolichtbogenofen, der Giesspfanne, dem Linz-Donawitz-Verfahren oder dem Sauerstoff-Blasverfahren.

Besonders vorteilhaft ist es, wenn die eisenhaltige Schlacke Kupferschlacke ist. Bindemittelzusammensetzungen, die Kupferschlacke enthalten, weisen eine deutlich verbesserte Leitfähigkeit auf.

Bevorzugt weist die eisenhaltige Schlacke eine Rohdichte von mehr als 3.0 g/l, insbesondere mehr als 3.2 g/l, auf.

Bevorzugt weist die eisenhaltige Schlacke, einen Gehalt an freiem CaO von unter 1 Gewichts-%, bevorzugt unter 0.5 Gewichts-%, bezogen auf das Gewicht der eisenhaltigen Schlacke, auf. Unter freiem CaO wird reaktives Calciumoxid verstanden, das mit Wasser zu Ca(OH)₂ reagieren kann.

Vorteilhaft zeigt die eisenhaltige Schlacke bei der Raumbeständigkeitsprüfung im Dampfversuch gemäss DIN EN 1744-1 eine Volumenzunahme von unter 2%, bevorzugt unter 1.5%, nach 168 Stunden Versuchsdauer.

Die eisenhaltige Schlacke kann aus unterschiedlichen eisenhaltigen Schlacken bestehen. In einer bevorzugten Ausführungsform der Erfindung umfasst die Bindemittelzusammensetzung mehrere eisenhaltige Schlacken, die sich in ihrer chemischen Zusammensetzung unterscheiden, insbesondere in ihrem Eisengehalt. Dadurch kann eine Optimierung der elektrischen Eigenschaften des hergestellten Materials erreicht werden.

Eine geeignete eisenhaltige Schlacke enthält folgende Hauptinhaltsstoffe:
- 8 bis 40 Gewichts-%, bevorzugt 10 bis 35 Gewichts-%, insbesondere 12 bis 33 Gewichts-%, im Speziellen 15 bis 30 Gewichts-%, FeO,
- 20 bis 50 Gewichts-%, bevorzugt 22 bis 40 Gewichts-%, CaO, wobei der Gehalt an freiem CaO bevorzugt unter 1 Gewichts-% liegt,
- 10 bis 40 Gewichts-%, bevorzugt 15 bis 30 Gewichts-%, SiO₂,
- 5 bis 20 Gewichts-%, bevorzugt 7 bis 15 Gewichts-%, Al₂O₃,
- 1 bis 10 Gewichts-%, bevorzugt 2 bis 8 Gewichts-%, MgO,
- 1 bis 10 Gewichts-%, bevorzugt 2 bis 8 Gewichts-%, MnO und
- 0 bis 10 Gewichts-% andere Stoffe,
   bezogen auf das Gesamtgewicht der eisenhaltigen Schlacke.

Eine weitere geeignete eisenhaltige Schlacke enthält folgende Hauptinhaltsstoffe:
- 40 bis 70 Gewichts-%, bevorzugt 45 bis 65 Gewichts-%, insbesondere 50 bis 60 Gewichts-%, FeO,
- 0.5 bis 15 Gewichts-%, bevorzugt 1 bis 10 Gewichts-%, CaO, wobei der Gehalt an freiem CaO bevorzugt unter 1 Gewichts-% liegt,
- 20 bis 45 Gewichts-%, bevorzugt 25 bis 40 Gewichts-%, SiO₂ und
- 0 bis 10 Gewichts-% andere Stoffe,
   bezogen auf das Gesamtgewicht der eisenhaltigen Schlacke.

Bevorzugt liegt der Feuchtegehalt der eisenhaltigen Schlacke unter 5 Gewichts-%, mehr bevorzugt unter 3 Gewichts-%, speziell bevorzugt unter 1 Gewichts-%, insbesondere unter 0.5 Gewichts-%.

Für gewisse Anwendungen kann es vorteilhaft sein, wenn die Porosität der eisenhaltigen Schlacke im Bereich von 5 Vol-% liegt. Damit kann das Gewicht des Produktes ohne grosse Beeinträchtigung der Endeigenschaften reduziert werden.

Für gewisse Anwendungen kann es auch vorteilhaft sein, wenn die Porosität der eisenhaltigen Schlacke über 5 Vol-% liegt, damit kann das Gewicht des Produktes gesenkt werden.

Bei gewissen Anwendungen, speziell für hochfeste Materialien, kann es vorteilhaft sein, wenn die Porosität der Schlacke unter 5 Vol-%, bevorzugt unter 3 Vol-%, liegt.

Bevorzugt weisen die Schlackepartikel eine unregelmässige Form und/oder Oberfläche auf und sind insbesondere nicht kugelförmig. Dies ist vorteilhaft, insbesondere für eine Verzahnung der Partikel untereinander und für einen guten Verbund mit dem Bindemittel.

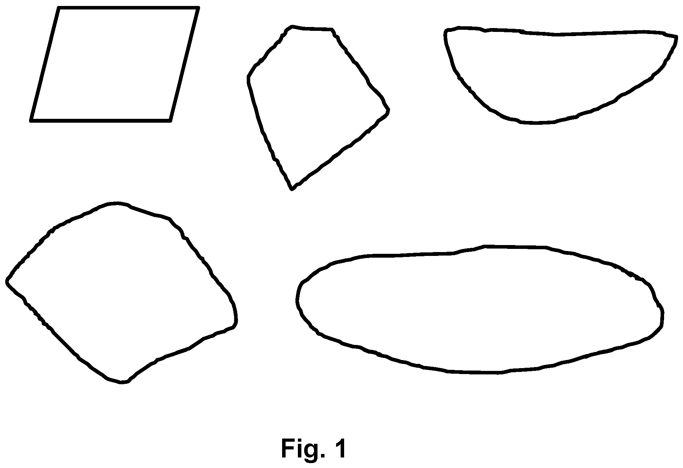

Insbesondere können die Schlackepartikel jede nicht kugelförmige geometrische Form, entweder gleichförmig oder uneinheitlich, aufweisen. Beispielsweise können die Partikel eine konische, polygonale, kubische, fünfeckige, sechseckige, achteckige, prismatische und/oder polyedrische Form aufweisen. Uneinheitliche Partikel können beispielsweise kreisförmige, elliptische, ovale, quadratische, rechteckige, dreieckige oder mehreckige Querschnitte aufweisen, die sich zumindest teilweise darin befinden. Die Ausdrücke "uneinheitlich" oder "irregulär" geformte Partikel beziehen sich auf dreidimensionale Partikelformen wobei mindestens zwei unterschiedliche Querschnitte durch die Partikel eine unterschiedliche Form aufweisen. Beispielhafte Querschnitte durch Schlackepartikel mit unregelmässiger Form sind schematisch in Fig. 1 dargestellt.

Schlacke, insbesondere Schlacke aus der Metallgewinnung oder dem Metallrecycling, wird typischerweise in flüssigem Zustand von der Metallschmelze abgetrennt und, typischerweise in Schlackenbeeten, zur Abkühlung gelagert. Die Abkühlung kann, etwa durch Aufsprühen von Wasser, beschleunigt werden. Der Abkühlungsprozess kann die physikalischen Eigenschaften, insbesondere die Kristallinität und die Korngrösse der Schlacke beeinflussen.

Vorteilhaft ist eine Schlacke, insbesondere eine Stahlschlacke, die, insbesondere in Schlackenbeeten, mit Wasser abgekühlt wurde. Durch das raschere Abkühlen bricht die Schlacke in kleine Stücke.

Ebenso vorteilhaft ist eine Schlacke, insbesondere eine Kupferschlacke, die als Schlackestrom mit einem Druckwasserstrahl granuliert wurde.

Dadurch kann Energie für das Zerkleinern eingespart werden und es werden typischerweise kantige Partikel mit einer rauen und/oder unebenen Oberfläche erhalten. Ausserdem wird durch den Kontakt mit Wasser ein eventuell vorhandenes freies CaO in Ca(OH)₂ umgewandelt, was wünschenswert ist.

Für gewisse Anwendungen kann es auch vorteilhaft sein, insbesondere für elektrostatische Abschirmung, wenn die eisenhaltige Schlacke zusätzlich magnetische Eigenschaften aufweist.

Bevorzugt weist die eisenhaltige Schlacke, eine Partikelgrösse von maximal 16 mm, mehr bevorzugt maximal 8 mm, noch mehr bevorzugt maximal 4 mm, im Speziellen maximal 3.5 mm, auf. Bevorzugt weisen maximal 10 Gewichts-% der eisenhaltigen Schlacke eine Partikelgrösse von unter 0.06 mm auf.

Speziell bevorzugt weist die eisenhaltige Schlacke eine Partikelgrösse von 0.06 bis 8 mm, bevorzugt 0.06 bis 4 mm, mehr bevorzugt 0.06 bis 3.5 mm, auf. Schlackepartikel mit geeigneter Korngrösse können beispielsweise durch Fraktionieren, typischerweise durch Sieben, erhalten werden. Optional kann die Schlacke durch Brechen und/oder Mahlen zerkleinert werden. Solche Verfahren sind dem Fachmann bekannt.

Die Partikelgrösse kann durch ein Siebverfahren gemäss DIN EN 933-1 bestimmt werden.

Vorteilhaft weist die Schlacke eine gleiche oder vergleichbare Partikelgrössenverteilung (Sieblinie) auf, wie die für den jeweiligen Anwendungszweck üblichen Füllstoffe, die durch die Schlacke ersetzt werden. Dies kann durch Mischen von geeigneten Korngrössenfraktionen erreicht werden.

Es kann auch vorteilhaft sein, wenn die Bindemittelzusammensetzung zusätzlich zu der eisenhaltigen Schlacke ein weiteres Material, das einen hohen Gehalt an Eisen aufweist, und insbesondere bei der Stahlformung anfällt, gemischt wird. Ein solches Material ist beispielsweise Walzzunder. Walzzunder ist ein Nebenprodukt, das beim Walzen des Stahls anfällt, und enthält typischerweise 70-80 Gewichts-% Eisen, gerechnet als FeO. Bevorzugt ist der Walzzunder frei von Öl. In einer bevorzugten Ausführungsform umfasst die Bindemittelzusammensetzung zusätzlich Walzzunder. Bevorzugt beträgt der Anteil an Walzzunder in der Bindemittelzusammensetzung 0.1 bis 10 Gewichts-%, insbesondere 1 bis 8 Gewichts-%, bezogen auf das Gesamtgewicht der trockenen Bindemittelzusammensetzung.

Füllstoffe sind chemisch inerte, feste, partikuläre Stoffe und werden in verschiedenen Formen, Grössen und als unterschiedliche Materialien angeboten. Mineralische Füllstoffe können von feinen Sandpartikeln bis zu grossen groben Steinen variieren. Besonders geeignete Füllstoffe sind Sand, Kies, zerkleinerte Steine, kalzinierte Kiesel oder leichte Füllstoffe, wie insbesondere Ton, Bimsstein, Perlit oder Vermiculit. Weitere geeignete Füllstoffe sind gemahlener Kalkstein, Kreide, Quarzmehl, Titandioxid, Schwerspat oder Aluminiumoxid. Vorteilhaft werden unterschiedliche Füllstoffe gemischt. Bevorzugt umfasst der Füllstoff Kalksteinmehl, Kreide, Quarzmehl, feines Titandioxid, Schwerspatmehl, feines Aluminiumoxid, Kalksteinsand oder Quarzsand, oder Mischungen davon.

Die Partikelgrösse der Füllstoffe richtet sich nach der jeweiligen Anwendung und kann bis zu 32 mm oder mehr betragen. Bevorzugt liegt die Partikelgrösse bei maximal 16 mm, speziell bevorzugt bei maximal 8 mm. Die Partikelgrösse der Füllstoffe liegt besonders bevorzugt unter 4 mm. Insbesondere weisen die Füllstoffe eine Partikelgrösse im Bereich von 0.1 µm bis 3.5 mm auf. Die Partikelgrösse kann durch ein Siebverfahren gemäss DIN EN 933-1 bestimmt werden. Vorteilhaft werden Füllstoffe von unterschiedlicher Partikelgrösse entsprechend der gewünschten Sieblinie gemischt. Geeignete Sieblinien für verschiedene Anwendungen sind dem Fachmann bekannt.

Bevorzugt umfasst die Bindemittelzusammensetzung mindestens einen feinen mineralischen Füllstoff, bevorzugt mit einer Partikelgrösse von maximal 0.1 mm, ausgewählt aus der Gruppe bestehend aus Kalksteinmehl, Kreide, Quarzmehl, feinem Titandioxid, Schwerspatmehl, Silicastaub und feinem Aluminiumoxid, und Mischungen davon.

Bevorzugt enthält die Bindemittelzusammensetzung Schlacke mit einer Partikelgrösse von mehr als 0.06 mm und feinen mineralischen Füllstoff, der keine Schlacke ist, mit einer Partikelgrösse von maximal 0.1 mm. Die Verwendung von feinen mineralischen Füllstoffen kann insbesondere Dichtheit des Gefüges erhöhen und so zur Verbesserung der Dauerhaftigkeit einer ausgehärteten Bindemittelzusammensetzung beitragen. Ausserdem kann die Verwendung von feinen mineralischen Füllstoffen, insbesondere von Calciumcarbonat mit einem Partikeldruchmesser von maximal 10 µm, die Festigkeitsentwicklung der Bindemittelzusammensetzung nach Zugabe von Wasser beschleunigen.

Bevorzugt enthält die Bindemittelzusammensetzung ausser Schlacke und dem feinen mineralischen Füllstoff keine weiteren Füllstoffe. Solche Bindemittelzusammensetzungen lassen sich gut verarbeiten und ergeben Materialien mit guter Festigkeit nach dem Aushärten.

Bevorzugt ist ein Masseverhältnis von Schlacke zu dem feinen mineralischen Füllstoff 100:0 bis 60:40, insbesondere 95:5 bis 70:30.

Es kann aber auch vorteilhaft sein, wenn die Bindemittelzusammensetzung als einzigen Füllstoff Schlacke enthält. Die Schlacke umfasst in diesem Fall alle mineralischen Partikel in der Bindemittelzusammensetzung mit einer Grösse von etwa 0.1 µm bis zu 1 mm, 2 mm, 4 mm, 8 mm, oder mehr. Dies ist vorteilhaft für eine verbesserte elektrische und auch verbesserte thermische Leitfähigkeit der ausgehärteten Bindemittelzusammensetzung und für eine maximale Verwertung der Schlacke.

In einer vorteilhaften Ausführungsform der Erfindung umfasst das Bindemittel mindestens ein mineralisches Bindemittel.

Bevorzugt umfasst das mineralische Bindemittel ein Bindemittel, welches in Anwesenheit von Wasser in einer Hydratationsreaktion zu festen Hydraten oder Hydratphasen reagiert. Dies ist insbesondere ein hydraulisches Bindemittel, welches nach Wasserzugabe auch unter Wasser erhärtbar ist, wie insbesondere Zement oder hydraulischer Kalk, oder ein latent hydraulisches Bindemittel, welches unter dem Einwirken von Zusätzen mit Wasser abbindet, wie insbesondere Hüttensand, oder puzzolanische Bindemittel, wie insbesondere Flugasche, oder ein nicht hydraulisches Bindemittel, wie insbesondere Calciumsulfat in Form von Anhydrit, oder Halbhydrat-Gips. Bevorzugt ist das mineralische Bindemittel ausgewählt aus der Gruppe bestehend aus Zement, Gips, gebrannter Kalk, Flugasche und Hüttensand. Bevorzugt umfasst das mineralische Bindemittel mindestens ein hydraulisches Bindemittel, bevorzugt ein zementöses Bindemittel.

Besonders bevorzugt ist das mineralische Bindemittel ein Zement gemäss DIN EN 197-1, ein Calciumsulfoaluminatzement oder ein Calciumaluminatzement, oder Mischungen davon. Als Zement kann jeder verfügbare Zementtyp oder eine Mischung von zwei oder mehreren Zementtypen verwendet werden, beispielsweise die unter der DIN EN 197-1 klassifizierten Zemente: Portlandzement (CEM I), Portlandkompositzement (CEM II), Hochofenschlackezement (CEM III), Puzzolanischer Zement (CEM IV) und Kompositzement (CEM V). Selbstverständlich sind Zemente, die gemäß einem alternativen Standard, wie beispielsweise dem ASTM-Standard oder dem JIS-Standard, produziert werden, gleichermassen geeignet.

Am meisten bevorzugt ist Portlandzement oder ein Zement enthaltend Portlandzement gemäss DIN EN 197-1. Portlandzement ist besonders einfach verfügbar und ermöglicht die Herstellung von Materialien mit guten mechanischen und Verarbeitungseigenschaften.

Es kann auch vorteilhaft sein, wenn das mineralische Bindemittel zusätzlich oder anstelle des Zementes andere Bindemittel enthält. Dies sind insbesondere latent hydraulische Bindemittel und/oder puzzolanische Bindemittel. Geeignete latenthydraulische und/oder puzzolanische Bindemittel sind insbesondere Hüttensand, Flugasche und/oder Silicastaub (amorphes SiO₂, Silicafume).

In einer vorteilhaften Ausführungsform enthält das mineralische Bindemittel neben Portlandzement noch fein gemahlenen Hüttensand, Flugasche und/oder Silicastaub, bevorzugt in 2 bis 95 Gewichts-%, insbesondere 5 bis 65 Gewichts-%, besonders bevorzugt 10 bis 40 Gewichts-%, bezogen auf das Gesamtgewicht des mineralischen Bindemittels.

Vorteilhaft ist der Gehalt an Zement in der Bindemittelzusammensetzung 5 bis 50 Gewichts-%, bevorzugt 10 bis 45 Gewichts-%, bezogen auf 100 Gewichts-% der trockenen Bindemittelzusammensetzung.

In einer bevorzugten Ausführungsform ist das Bindemittel Portlandzement, optional in Kombination mit Flugasche und/oder fein gemahlenen Hüttensand.

Eine vorteilhafte Bindemittelzusammensetzung umfassend Zement enthält:
- 5 bis 50 Gewichts-%, bevorzugt 10 bis 45 Gewichts-%, Zement, insbesondere Portlandzement,
- 0 bis 20 Gewichts-%, bevorzugt 2 bis 10 Gewichts-%, Flugasche und/oder fein gemahlenen Hüttensand,
- 0 bis 10 Gewichts-% Gips,
- 30 bis 90 Gewichts-%, bevorzugt 45 bis 85 Gewichts-%, mindestens eines mineralischen Füllstoffes, wobei mindestens 20 Gewichts-% des Füllstoffes eisenhaltige Schlacke sind, und
- 0 bis 5 Gewichts-% weitere Additive,
   bezogen auf das Gesamtgewicht der trockenen Bindemittelzusammensetzung.

Das mineralische Bindemittel umfasst mindestens ein Aluminiumsilikat und mindestens ein Alkalisilikat. Diese reagieren in Gegenwart von Wasser zu einem Geopolymer. Geopolymere gelten als umweltfreundliche Baustoffe, da bei der Herstellung ihrer Ausgangsstoffe deutlich weniger CO₂ entsteht als bei der Herstellung von Portlandzement.

Als Aluminiumsilikat sind alle Aluminiumsilikate, mit welchen ein Geopolymer herstellbar ist, geeignet. Besonders geeignete Aluminiumsilikate sind Ton, kalzinierter Ton, Flugasche, fein gemahlener Hüttensand, Zeolith, Feldspat oder Mischungen davon. Bevorzugte Aluminiumsilikate sind ausgewählt aus der Gruppe bestehend aus Ton, kalzinierter Ton, Flugasche und Hüttensand. Als "Ton" wird wasserhaltiges Aluminiumsilikat bezeichnet, das bei Verwitterungsprozessen entsteht. Zu den Tonen gehören Kaolinit, Bentonit, gemeine Tone und Kaolinittone.

Als "kalzinierter Ton" wird das Reaktionsprodukt aus dem Kalzinieren eines Tonminerals, beispielsweise Metakaolin, bezeichnet,

Als "Flugasche" wird ein Nebenprodukt aus Kohlekraftwerken bezeichnet, welches in Form eines feinen Pulvers aus der Abluft ausgefiltert wird.

Als "Hüttensand", wird das vorwiegend amorphe, nicht-metallische Nebenprodukt bei der Roheisenherstellung im Hochofen bezeichnet.

Alkalisilikat wird auch als Wasserglas bezeichnet und ist ein Stoff der Formel M₂O * n SiO₂, wobei M für Na, K oder Li und n für das Verhältnis von SiO₂ zu M₂O steht. Handelsübliche Alkalisilikate weisen typischerweise Werte von n im Bereich von etwa 0.5 bis 4 auf. In Wasser gelöstes Alkalisilikat ist eine alkalische, klare, kolloide Lösung oder ein Gel. Zu den Alkalisilikaten gehören auch Orthosilikate, M₄O₄Si mit n gleich 0.5, und Metasilikate, M₂O₃Si mit n gleich 1. In einer bevorzugten Ausführungsform ist das Alkalisilikat ein Natrium- und/oder Kaliumsilikat.

Bevorzugt weist das Alkalisilikat ein molares Verhältnis von SiO₂ zu M₂O im Bereich von 0.8 bis 2.4, bevorzugt von 1.0 bis 2.0, insbesondere von 1.4 bis 2.0 auf. Dabei kann dieses bevorzugte Verhältnis durch Zugabe von zum Beispiel NaOH oder KOH eingestellt worden sein.

Das Alkalisilikat für das Geopolymer ist bevorzugt ein wässriges Alkalisilikat.

Bevorzugt liegt das Gewichtsverhältnis von Aluminiumsilikat zu Alkalisilikat in dieser Bindemittelzusammensetzung im Bereich von 6:1 bis 2:1.

Eine vorteilhafte Bindemittelzusammensetzung bei der das Bindemittel nach der Härtereaktion ein Geopolymer ist, enthält:
- 10 bis 70 Gewichts-% mineralisches Bindemittel, umfassend mindestens ein Aluminiumsilikat und mindestens ein Alkalisilikat,
- 30 bis 90 Gewichts-% mindestens eines Füllstoffes, insbesondere eines mineralischen Füllstoffes, wobei mindestens 20 Gewichts-% des Füllstoffes eisenhaltige Schlacke sind, und
- 0 bis 5 Gewichts-% weitere Additive,
   bezogen auf das Gesamtgewicht der trockenen Bindemittelzusammensetzung.

Die Bindemittelzusammensetzung ist hier mindestens zweikomponentig und umfasst:
- eine Pulverkomponente, umfassend das mindestens eine Aluminiumsilikat und den Füllstoff, und
- eine wässrige Komponente, umfassend das mindestens eine Alkalisilikat.

Bevorzugt liegt das Alkalisilikat als wässrige Lösung mit 30 bis 50 Gewichts-% Alkalisilikat vor.

In einer weiteren vorteilhaften Ausführungsform der Erfindung umfasst das Bindemittel ein organisches Bindemittel, insbesondere mindestens ein Epoxidharz und mindestens einen Härter für das Epoxidharz oder mindestens ein Polyisocyanat und mindestens ein Polyol, und ist bevorzugt frei von mineralischen Bindemitteln.

Für gewisse Anwendungen kann es vorteilhaft sein, wenn die erfindungsgemässe Bindemittelzusammensetzung noch 0.1 bis 5 Gewichts-%, bezogen auf das Gesamtgewicht der Bindemittelzusammensetzung, elektrisch leitfähige Pulver oder Fasern, insbesondere Russ, Graphit, Stahlfasern oder Kohlenstofffasern, enthält. Dadurch kann die elektrische Leitfähigkeit des Materials erhöht werden.

Bevorzugt ist die Bindemittelzusammensetzung frei von auf Kohlenstoffbasierenden Zusätzen, wie insbesondere Russ, Graphit, Kohlefasern oder Kohlenstoff-Nanoröhrchen, und frei von metallischen Zusätzen wie beispielsweise Metallpulver oder Metallfasern.

Die Bindemittelzusammensetzung kann, je nach Anwendung und Bindemitteltyp, optional noch ein oder mehrere Additive enthalten, insbesondere
- Verflüssiger, speziell Betonverflüssiger oder -superverflüssiger, insbesondere anionische Kammpolymere mit Polyalkylenglykol-Seitenketten, im Speziellen Kammpolymere mit Carbonsäure-Gruppen und Polyalkylenglykol-Gruppen (Polycarboxylatether),
- Verzögerer für eine Zementhydratation, insbesondere Hydroxycarbonsäuren oder deren Salze,
- Beschleuniger für eine Zementhydratation, insbesondere Kristallisationskeime, wie beispielsweise feine oder ultrafeine CSH-, Gips-, CaCO₃- oder Ca(OH)₂-Partikel, Nitrite, Nitrate, Chloride, Sulfate, Carbonate, Fluoride, Oxide oder Hydroxide von Alkali- oder ErdalkaliMetallen, organische Amine, insbesondere Hydroxyalkylamine, oder Mischungen davon,
- Beschleuniger für eine Epoxidharz-Härter-Reaktion,
- Katalysatoren für eine Isocyanat-Polyol-Reaktion, insbesondere metallorganische Verbindungen oder Amine, insbesondere sec. oder tert. Amine,
- Rheologiehilfsmittel, insbesondere Zelluloseether oder -ester oder bakterielle Polysaccharide,
- filmbildende Polymere, als wässrige Polymerdispersion oder als redispergierbare Polymerpulver, insbesondere Polymere mit einer maximalen Filmbildungstemperatur von unter 25°C, wie beispielsweise Homo- oder Copolymere von Acrylestern, Copolymere von Styrol und Butadien, Copolymere von Styrol mit Acrylestern und Homo- oder Copolymere von Vinylacetat,
- Polymerpulver, insbesondere Superabsorber,
- Fasern, insbesondere Kunststoff-Fasern
- Verdicker, Pumphilfsmittel, Schwindreduzierer, Korrosionsinhibitoren, Luftporenbildner, Entschäumer, Netzmittel, Emulgatoren, Dispergiermittel, Farbstoffe, nicht-reaktive Verdünner, Pigmente, Weichmacher, oder Konservierungsmittel.

Das Additiv kann bei Mehrkomponenten-Systemen in jeder dafür geeigneten Komponente vorliegen.

Die Bindemittelzusammensetzung kann als einkomponentige, zwei- oder mehrkomponentige Zusammensetzung vorliegen.

Als "einkomponentig" wird in diesem Dokument eine Zusammensetzung bezeichnet, bei welcher alle Bestandteile der Zusammensetzung im gleichen Gebinde vorliegen, welche als solche lagerstabil ist, und welche mit Wasser härtbar ist.

Als "zweikomponentig" beziehungsweise "mehrkomponentig" wird in diesem Dokument eine Zusammensetzung bezeichnet, bei welcher die Bestandteile der Zusammensetzung in zwei beziehungsweise mehreren verschiedenen Komponenten vorliegen. Hierbei werden zumindest diejenigen Bestandteile der Zusammensetzung, die miteinander reagieren können, in voneinander getrennten Gebinden oder in getrennten Abteilungen eines Gebindes gelagert und erst kurz vor der Applikation der Zusammensetzung miteinander vermischt.

Die Verarbeitung der Bindemittelzusammensetzung erfolgt bei einkomponentigen Zusammensetzungen durch Vermischen der Bindemittelzusammensetzung mit einer geeigneten Menge an Wasser. Bei zwei- oder mehrkomponentigen Bindemittelzusammensetzungen werden alle Komponenten in geeigneter Reihenfolge und Menge vermischt, optional unter Zugabe von einer geeigneten Menge an Wasser. Solche Verarbeitung ist dem Fachmann bekannt.

Bei der Verarbeitung von Bindemittelzusammensetzungen, die ein hydraulisches oder latent hydraulisches Bindemittel enthalten, liegt das MasseVerhältnis von Wasser zu hydraulischem Bindemittel nach dem Mischen aller Komponenten im Bereich von 0.25 bis 1.0, bevorzugt 0.28 bis 0.8, insbesondere 0.30 bis 0.6. Das Wasser wird solchen Bindemittelzusammensetzungen vorteilhaft erst kurz vor der Verarbeitung zugegeben.

In Bindemittelzusammensetzungen die eine, zwei oder mehrere Komponenten umfassen, liegt das Wasser bevorzugt bereits in einer oder mehreren der Komponenten vor. Die wasserhaltigen Komponenten umfassen hierbei keine Bestandteile, die unter normalen Lagerbedingungen mit dem Wasser reagieren können.

Ein weiterer Gegenstand der vorliegenden Erfindung ist ein Verfahren zur Herstellung von Materialien mit bei 20°C verbesserter elektrischer Leitfähigkeit, dadurch gekennzeichnet, dass alle Bestandteile einer Bindemittelzusammensetzung, umfassend mindestens ein Bindemittel und mindestens einen mineralischen Füllstoff, gemischt werden und die Mischung aushärten gelassen wird, wobei mindestens 20 Gewichts-% des Füllstoffes eisenhaltige Schlacke sind, und wobei beim Mischen von Bindemittelzusammensetzungen, die ein mineralisches Bindemittel enthalten, Wasser vorhanden ist.

Es kann auch vorteilhaft sein, insbesondere für die Verwendung der erfindungsgemässen Bindemittelzusammensetzung als Ausgleichsmörtel, Estrich oder Bodenbeschichtung, wenn eine erfindungsgemässe Bindemittelzusammensetzung, die organische Bindemittel umfasst und bei der kein Wasser zugegeben wird, in folgenden Schritten gemischt und appliziert wird:
- Vermischen aller Komponenten der Bindemittelzusammensetzung ausser den Füllstoffen mit einer Partikelgrösse von mehr als 0.06 mm mit geeigneten Mischgeräten,
- Applizieren der Mischung als Ausgleichsmörtel, Estrich oder Bodenbeschichtung, und
- Einstreuen der Füllstoffe mit einer Partikelgrösse von mehr als 0.06 mm, wobei mindestens 20 Gewichts-% der Füllstoffe eisenhaltige Schlacke sind, von Hand oder mit einer geeigneten Vorrichtung.

Das Material mit verbesserter elektrischer Leitfähigkeit weist bevorzugt einen um mindestens einen Faktor von 1.5, mehr bevorzugt mindestens 1.8, insbesondere mindestens 2.0, verringerten spezifischen elektrischen Durchgangswiderstand auf, im Vergleich zu einem ansonsten identischen Material, das aber statt der eisenhaltigen Schlacke Quarzsand von gleicher Partikelgrösse enthält. Der elektrische Widerstand wird zwischen den zwei gegenüberliegenden 40 x 40 mm Flächen eines Prismas von 40 x 40 x 160 mm durch Anlegen einer Spannung von 100 mV und einer Frequenz von 1 kHz, bei 20°C, bestimmt. Die Messung des spezifischen elektrischen Durchgangswiderstands wird bei Prüfkörpern, die mindestens ein mineralisches Bindemittel enthalten, nach 28 Tagen Lagerung bei 20°C und 57% rel. Luftfeuchtigkeit, und bei Prüfkörpern, die nur organische Bindemittel enthalten, nach 7 Tagen Lagerung bei 20°C und 57% rel. Luftfeuchtigkeit, durchgeführt.

In einer bevorzugten Ausführungsform erfolgt das Aushärten der Bindemittelzusammensetzung unter Anlegen einer elektrischen Spannung an Elektroden, die in der auszuhärtenden Bindemittelzusammensetzung angebracht oder eingebettet sind. Da durch die Schlacke die elektrische Leitfähigkeit des Materials erhöht ist, kann durch das Anlegen einer Spannung an die Elektroden Wärme erzeugt werden, was die Härtungsreaktion beschleunigt.

Ein weiterer Gegenstand der vorliegenden Erfindung ist ein Material mit bei 20°C verbesserter elektrischer Leitfähigkeit, erhältlich durch Vermischen aller Bestandteile einer Bindemittelzusammensetzung, umfassend mindestens ein Bindemittel und mindestens einen mineralischen Füllstoff, und Aushärten lassen der erhaltenen Mischung, wobei mindestens 20 Gewichts-% des mineralischen Füllstoffes eisenhaltige Schlacke sind.

Ein weiterer Gegenstand der Erfindung ist die Verwendung des Materials mit bei 20°C verbesserter elektrischer Leitfähigkeit, wie vorgängig beschrieben, für die Herstellung von Opferanoden, insbesondere in Bauwerken. Für die Verwendung zur Herstellung von Opferanoden ist das Bindemittel bevorzugt ein mineralisches Bindemittel, insbesondere ein Bindemittel das nach dem Aushärten ein Geopolymer darstellt.

Ein weiterer Gegenstand der Erfindung ist die Verwendung des Materials mit bei 20°C verbesserter elektrischer Leitfähigkeit, wie vorgängig beschrieben, als Mörtel, Reparaturmörtel, Ausgleichsmörtel, Estrich, Vergussmörtel, Verputz, Vergussmasse, Beschichtung, insbesondere Bodenbeschichtung, oder Ausgleichsmasse.

### Kurze Beschreibung der Figuren

- Fig. 1 zeigt:: eine schematische Darstellung von beispielhaften Querschnitten von Schlackepartikeln mit unregelmässiger Form.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"Ref." steht für Referenzbeispiel
"Bsp." steht für erfindungsgemässes Beispiel

### Materialien

Alle Sande und Schlacken wurden vor der Verwendung getrocknet und durch Sieben in die gewünschten Kornfraktionen aufgeteilt. Die Kornfraktionen wurden anschliessend jeweils so gemischt, dass die Korngrössenverteilung der verwendeten Sande einer vorgegebenen Korngrössenverteilung (Sieblinie) entsprach.

EOS-Sand ist eine Elektroofenschlacke von Stahl Gerlafingen, Schweiz. Das eingesetzte Material hatte eine Rohdichte von etwa 3.3 kg/l und einen Gehalt an Eisen, gerechnet als FeO, von etwa 19 Gewichts-%.

CS ist NAstra^{®} Eisensilikat Granulat, eine glasige Kupferschlacke, erhältlich von Sibelco, Deutschland, mit einer Rohdichte von etwa 3.7 kg/l und einem Gehalt an Eisen, gerechnet als FeO, von etwa 51 Gewichts-%.

HOS ist eine Hochofenstückschlacke der Hüttenwerke Krupp Mannesmann, Deutschland, erhältlich von der Firma Hermann Rauen GmbH & Co., Deutschland. Das eingesetzte Material hatte eine Rohdichte von 2.9 kg/l und einen Gehalt an Eisen, gerechnet als FeO, von etwa 3 Gewichts-%.

Raulit^{®} ist eine Hochofenschlacke der DK-Recycling und Roheisen GmbH, Deutschland, erhältlich unter dem Markennamen Raulit^{®}-Mineralbaustoff-gemisch von der Firma Hermann Rauen GmbH & Co., Deutschland. Das eingesetzte Material hatte eine Rohdichte von etwa 2.9 kg/l und einen Gehalt an Eisen, gerechnet als FeO, von etwa 1 Gewichts-%.

HS ist ein Hüttensand von voestalpine AG, Österreich. Das eingesetzte Material hatte eine Rohdichte von etwa 2.9 kg/l und einen Gehalt an Eisen, gerechnet als FeO, von unter 1 Gewichts-%.

Sikadur^{®}-42 HE ist ein dreikomponentiger Vergussmörtel auf Epoxidharzbasis, erhältlich von Sika Schweiz AG.

### Bestimmung des spezifischen elektrischen Oberflächenwiderstandes (R_{OF})

Der elektrische Oberflächenwiderstand der Prüfkörper wurde in regelmässigen Zeitabständen gemessen. Hierfür wurde der Widerstand an einer der Längsflächen eines 40 x 40 x160 mm Prüfkörpers mit dem Widerstandsmessgerät Resipod, erhältlich bei Proceq, Schweiz, bestimmt. Es handelt sich dabei um ein 4-Punkt-Messgerät. Die Elektroden sind linear in einem Abstand von 50 mm angeordnet. Ein elektrischer Strom wird an den äusseren Elektroden angelegt und die Potentialdifferenz zwischen den inneren beiden Elektroden gemessen. Die Stromamplitude wird von dem Gerät entsprechend dem elektrischen Widerstand der Probe automatisch gewählt, und liegt typischerweise zwischen 10 und 200 µA. Diese Methode entspricht der AASHTO 95-11. Um Kontaktprobleme zwischen Elektroden und Oberfläche zu vermeiden, wurde vor jeder Messung die Oberfläche, an der gemessen wurde, kurz mit einen Schwamm, der mit gesättigter Ca(OH)₂-Lösung getränkt war, benetzt.

### Bestimmung des spezifischen elektrischen Durchgangswiderstandes (R_{DU})

Der spezifische Durchgangswiderstand der 40 x 40 x 160 mm-Prüfkörper wurde mit der EIS-Methode bestimmt. Hierfür wurden an die Enden (40 x 40 mm-Flächen) der Prüfkörper Edelstahlelektroden angelegt, die die Flächen vollständig abdeckten. Um einen guten Kontakt zwischen Prüfkörper und Elektrode zu gewährleisten, wurde jeweils zwischen Prüffläche und Elektrode ein Schwamm geklemmt, der mit einer gesättigten Calciumhydroxid-Lösung getränkt war. Der Durchgangswiderstand der Prüfkörper wurde anschliessend innerhalb von etwa 15 Sekunden durch Anlegen eines Amplitudensignals von 100 mV mit einer Frequenz von 1 kHz beziehungsweise 10 kHz an die beiden Edelstahlelektroden bestimmt.

### Bestimmung von Biegezug- und Druckfestigkeit

Die Biegezugfestigkeit und die Druckfestigkeit von Prüfkörpern von 40 x 40 x 160 mm wurde gemäss DIN EN 196-1 bestimmt.

### 1. Zementmörtel

Die Zusammensetzung der Mörtel ist in Tabelle 1 angegeben. Die Zusammensetzungen der Mörtel unterscheiden sich nur durch den verwendeten Sand. Die Korngrössenverteilung der Sande sowie die zugegebenen Additive waren in allen Mischungen gleich.

**Tabelle 1: Zusammensetzung der Mörtel**

| | **Menge in Gewichts-%** |
|---|---|
| Zement (Typ CEM I) | 33.5 |
| Quarz-Sand bzw. Schlacke-Sand 0.06-2.2 mm | 60 |
| Kalksteinmehl | 4 |
| Additive | 2.5 |

### Herstellung und Lagerung der Prüfkörper

Die trockenen Bestandteile der Mörtel, wie in Tabelle 1 angegeben, wurden homogen gemischt. Anschliessend wurde Wasser in solch einer Menge zugegeben, um einen W/Z (Gewichtsverhältnis von Wasser zu Zement) von 0.45 zu erhalten. Der Frischmörtel wurde für drei Minuten mit einem mechanischen Mischer gut und homogen gemischt. Die Verarbeitbarkeit der Mörtel M1 bis M4 war vergleichbar. Der Mörtel wurde in Stahlformen von 40 x 40 x 160 mm gefüllt und in der Schalung für 24 Stunden bei 20°C abgedeckt gelagert. Danach wurden die Prüfkörper aus der Schalung genommen und bei 57% rel. Luftfeuchtigkeit und 20°C bzw. bei 68% rel. Luftfeuchtigkeit und 20°C, gelagert.

Tabelle 2 zeigt den spezifischen elektrischen **Oberflächenwiderstand R_{OF}** der Mörtel M1 und M2 in kΩ·cm in Abhängigkeit von Lagerdauer und relativer Luftfeuchtigkeit (r.F.). Das Probenalter ist das Alter der Prüfkörper in Tagen. Die Messwerte sind Mittelwerte aus Messungen an jeweils drei Prüfkörpern.

**Tabelle 2**

| | **Ref. 1** | **Bsp. 1** | | **Ref. 2** | **Bsp. 2** | |
|---|---|---|---|---|---|---|
| Mörtel | M1 | M2 | | M1 | M2 | |
| Sand | Quarz | EOS | | Quarz | EOS | |
| Probenalter [Tage] | Spezifischer Widerstand R_{OF} [kΩ·cm] | | Faktor* | Spezifischer Widerstand R_{OF} [kΩ·cm] | | Faktor* |
| | Lagerung bei 57 % r.F. | | | Lagerung bei 68 % r.F. | | |
| 7 | 66 | 36 | 1.8 | 56 | 35 | 1.6 |
| 14 | 92 | 50 | 1.8 | 83 | 48 | 1.7 |
| 21 | 109 | 60 | 1.8 | 94 | 56 | 1.7 |
| 28 | 369 | 75 | 4.9 | 118 | 69 | 1.7 |

| | | | | | | |
|---|---|---|---|---|---|---|
| * Faktor um den der spezifische elektrische Oberflächenwiderstand des erfindungsgemässen Materials im Vergleich zum Referenzmaterial reduziert ist (Widerstand M1/Widerstand M2) | | | | | | |

Tabelle 3 zeigt den spezifischer elektrischen **Durchgangswiderstand R_{DU}** der Mörtel M1 bis M4 bei Lagerung der Prüfkörper bei 57% rel. Luftfeuchtigkeit

**Tabelle 3**

| | **Ref. 3** | **Ref. 4** | | **Bsp. 3** | | **Bsp. 4** | |
|---|---|---|---|---|---|---|---|
| Mörtel | M1 | M3 | | M2 | | M4 | |
| Sand | Quarz | HOS | | EOS | | CS | |
| Probenalter [Tage] | Spez. Widerstand R_{DU} [kΩ·cm] | | F* | [kΩ·cm] | F* | [kΩ·cm] | F* |
| 28 | 28.0 | 32.0 | 0.9 | 10.2 | 2.7 | 7.0 | 4.0 |

| | | | | | | | |
|---|---|---|---|---|---|---|---|
| * F = Faktor um den der spezifische elektrische Durchgangswiderstand der Mörtel M2, M3 und M4 im Vergleich zu Referenzmörtel M1 reduziert ist (Widerstand M1/Widerstand M2, M3 bzw. M4) | | | | | | | |

Aus Tabelle 2 und 3 ist ersichtlich, dass die Mörtel M2 und M4, die eisenhaltige Stahlschlacke enthalten, einen deutlich geringeren spezifischen elektrischen Widerstand aufweisen, als die Mörtel M1 und M3. Ein geringerer elektrischer Widerstand bedeutet eine bessere elektrische Leitfähigkeit.

Tabelle 4 zeigt die Druckfestigkeit der Prüfkörper in MPa nach Lagerung bei 21°C und 68% relativer Luftfeuchtigkeit.

**Tabelle 4**

| | **Ref. 5** | **Bsp. 5** |
|---|---|---|
| Mörtel | M1 | M2 |
| Sand | Quarz | EOS |

| Alter der Prüfkörper [Tage] | Druckfestigkeit [MPa] | |
|---|---|---|
| 1 | 22 | 26 |
| 7 | 50 | 54 |
| 28 | 66 | 71 |

## Patentansprüche

1. Verwendung einer Bindemittelzusammensetzung, umfassend mindestens ein Bindemittel und mindestens einen mineralischen Füllstoff, für die Herstellung von Materialien mit bei 20°C verbesserter elektrischer Leitfähigkeit, **dadurch gekennzeichnet, dass** mindestens 20 Gewichts-%, bevorzugt mindestens 30 Gewichts-%, mehr bevorzugt mindestens 40 Gewichts-%, noch mehr bevorzugt mindestens 50 Gewichts-%, im Speziellen mindestens 60 Gewichts-%, insbesondere mindestens 70 Gewichts-%, des mineralischen Füllstoffes eisenhaltige Schlacke sind, **dadurch gekennzeichnet, dass** das Bindemittel mindestens ein Aluminiumsilikat und mindestens ein Alkalisilikat umfasst.

2. Verwendung gemäss Anspruch 1, **dadurch gekennzeichnet, dass** die Bindemittelzusammensetzung 30 bis 95 Gewichts-%, bevorzugt 40 bis 90 Gewichts-%, besonders bevorzugt 50 bis 85 Gewichts-%, mineralischen Füllstoff umfasst, bezogen auf das Gesamtgewicht der trockenen Bindemittelzusammensetzung.

3. Verwendung gemäss einem der vorhergehenden Ansprüche, **dadurch gekennzeichnet, dass** die eisenhaltige Schlacke mindestens 8 Gewichts-%, bevorzugt mindestens 10 Gewichts-%, mehr bevorzugt mindestens 12 Gewichts-%, Eisen, gerechnet als FeO, bezogen auf das Gewicht der eisenhaltigen Schlacke, umfasst.

4. Verwendung gemäss einem der vorhergehenden Ansprüche, **dadurch gekennzeichnet, dass** die eisenhaltige Schlacke Stahlschlacke, insbesondere Schlacke aus dem Elektrolichtbogenofen, der Giesspfanne, dem Linz-Donawitz-Verfahren oder dem Sauerstoff-Blasverfahren, ist.

5. Verwendung gemäss einem der Ansprüche 1 bis 3, **dadurch gekennzeichnet, dass** die eisenhaltige Schlacke Kupferschlacke ist.

6. Verwendung gemäss einem der vorhergehenden Ansprüche, **dadurch gekennzeichnet, dass** die eisenhaltige Schlacke eine Partikelgrösse von maximal 16 mm, bevorzugt maximal 8 mm, mehr bevorzugt maximal 4 mm, im Speziellen maximal 3.5 mm, aufweist.

7. Verwendung gemäss einem der vorhergehenden Ansprüche, **dadurch gekennzeichnet, dass** die Bindemittelzusammensetzung feinen Füllstoff, bevorzugt mit einer Partikelgrösse von maximal 0.1 mm, ausgewählt aus der Gruppe bestehend aus Kalksteinmehl, Quarzmehl, feinem Titandioxid, Schwerspatmehl, Silicastaub und feinem Aluminiumoxid, und Mischungen davon, umfasst.

8. Verwendung gemäss einem der vorhergehenden Ansprüche, **dadurch gekennzeichnet, dass** das Bindemittel mindestens ein mineralisches Bindemittel, bevorzugt mindestens ein hydraulisches Bindemittel, insbesondere ein zementöses Bindemittel, umfasst.

9. Verfahren zur Herstellung von Materialien mit bei 20 °C verbesserter elektrischer Leitfähigkeit, **dadurch gekennzeichnet, dass** alle Bestandteile einer Bindemittelzusammensetzung, umfassend mindestens ein Bindemittel und mindestens einen mineralischen Füllstoff, gemischt werden und die Mischung aushärten gelassen wird, wobei mindestens 20 Gewichts-% des Füllstoffes eisenhaltige Schlacke sind, und wobei beim Mischen von Bindemittelzusammensetzungen, die ein mineralisches Bindemittel enthalten, Wasser vorhanden ist.

10. Verfahren gemäss Anspruch 9, **dadurch gekennzeichnet, dass** das Aushärten der Bindemittelzusammensetzung unter Anlegen einer elektrischen Spannung an Elektroden, die in der auszuhärtenden Bindemittelzusammensetzung angebracht oder eingebettet sind, erfolgt.

11. Material mit bei 20°C verbesserter elektrischer Leitfähigkeit erhältlich durch ein Verfahren gemäss einem der Ansprüche 9 oder 10.

12. Verwendung des Materials gemäss Anspruch 11 für die Herstellung von Opferanoden, insbesondere in Bauwerken.

13. Verwendung des Materials gemäss Anspruch 11 als Mörtel, Reparaturmörtel, Ausgleichsmörtel, Estrich, Vergussmörtel, Verputz, Vergussmasse, Beschichtung, insbesondere Bodenbeschichtung, oder Ausgleichsmasse.
